# EUROPEAN PATENT SPECIFICATION

(11) **EP 3 671 133 B1**
(45) Date of publication and mention of the grant of the patent: **05.05.2021**
(21) Application number: 18382936.5
(22) Date of filing: 18.12.2018
(51) Int. Cl.: G01D 5/26, G01D 5/347, G01D 5/244

(54) **OPTOELECTRONIC MEASURING DEVICE**
OPTOELEKTRONISCHE MESSVORRICHTUNG
DISPOSITIF DE MESURE OPTOÉLECTRONIQUE

(43) Date of publication of application: 24.06.2020
(73) Proprietor: FAGOR AUTOMATION S.COOP., 20500 Arrasate - Mondragon (ES)
(72) Inventor: ZUNZUNEGI MUGICA, José Javier, 20550 ARETXABALETA (ES)
(74) Representative: Igartua, Ismael

(56) References cited:
- DE-A1- 19 711 753
- DE-A1- 19 729 481

## Description

### TECHNICAL FIELD

The present invention relates to optoelectronic measuring devices which are configured for measuring relative longitudinal movements in a measurement direction between a first object and a second object.

### PRIOR ART

Optoelectronic measuring devices which are suitable for determining the position between two objects generally comprise a calibrated ruler with a plurality of imprinted marks, and a readhead facing the calibrated ruler and movable with respect to said calibrated ruler in a measurement direction parallel to the calibrated ruler. The readhead comprises a light emitter emitting a light beam to illuminate the calibrated ruler, a detection device receiving the light going through or reflected by the calibrated ruler, and a control unit determining the position between the calibrated ruler and the readhead depending on the light received by the detection device.

Some of these devices comprise a hollow profile, and the calibrated ruler is arranged in a fixed manner inside said hollow profile. The hollow profile comprises a lid on each of its longitudinal ends to isolate the inside of said hollow profile as much as possible from the outside, such that the inside of the profile is kept clean. The hollow profile comprises a longitudinal opening which allows the longitudinal movement of the readhead, so that said readhead illuminates the calibrated ruler. A gasket for keeping the inside of the hollow profile isolated is arranged in the opening, despite the readhead.

The hollow profile is fixed to one of the objects, whereas the readhead is fixed to the other object.

To attach the hollow profile to the corresponding object, at least one screw or the like, which transversely goes through the wall of the hollow profile facing the opening and is inserted in said object, is often used. Said wall comprises a sufficient thickness for the screw to go through.

However, when the hollow profile is required to have a minimum size, the thickness of the wall facing the opening is not sufficient for the screw to go transversely through it, and the attachment of the hollow profile to the corresponding object must be established in another way.

One option for attaching the hollow profile to the corresponding object is to make a hollow profile with a length that is greater than the required length and to make through holes in the additional portion (one on each longitudinal end) through which screws for attachment to the object are inserted. An attachment part is inserted in the hollow profile, and the screw goes through the profile and said part. The part is arranged in the hollow profile in a floating manner, and this may involve the entry of dirt into the hollow profile.

To prevent this problem, another option for attaching the hollow profile to the corresponding object is to perform same through the lids of the hollow profile. In this case, since the lid is the one used for attaching the hollow profile to an object, it is necessary to assure that the lid itself is supported against said object. This aspect is assured during manufacture. One of the surfaces of the lid is aligned with a mounting surface of the hollow profile, and said surfaces, the surfaces of the lid and the surface of the profile, are supported on the object to which said hollow profile must be fixed, with the lid being attached to said object for fixing the profile to said object.

EP1764584A1 discloses an attachment of this type. Furthermore, for profiles of considerable lengths, at least one clamping jaw is incorporated in an intermediate position between the two lids for attaching the hollow profile to said object additionally in said positions and preventing vertical bending of the profile. However, if, due to mounting requirements, the hollow profile must be attached to the first object such that the opposite face of said hollow profile is arranged facing said first object, the lids, not the hollow profile, will be what are supported on the first object due to manufacturing tolerances of both the lids and the hollow profile (contact of the lids with the first object must be assured because the attachment of the hollow profile is established through said lids). This leads to there being a space between the object and the hollow profile which can result in the hollow profile bending towards the object (horizontal bending), with the calibrated ruler bending in this manner, which would cause an erroneous operation of the optoelectronic measuring device.

DE19729481A1 discloses an optoelectronic measuring device configured for measuring a relative longitudinal movement in a longitudinal measurement direction between a first object and a second object. The device comprises a longitudinal hollow profile, a respective lid attached to each longitudinal end of the hollow profile, a fixing device associated with each lid for attaching the hollow profile to the first object through the lids, and a readhead for being attached to the second object.

### DISCLOSURE OF THE INVENTION

The object of the invention is to provide an optoelectronic measuring device configured for measuring a relative longitudinal movement in a measurement direction between a first object and a second object, as defined in the claims.

The device comprises a longitudinal hollow profile, a respective lid attached to each longitudinal end of the hollow profile, a fixing device associated with each lid for attaching the hollow profile to the first object through the lids, and a readhead for being attached to the second object.

The device further comprises a compensation device associated with the hollow profile and configured for being attached to the hollow profile or to the first object, and, with it attached in that manner, for exerting a compensation force against the hollow profile, moving away from the first object, when the hollow profile is attached to the first object.

Therefore, if a gap is generated between said first object and the hollow profile when attaching the hollow profile to the first object, the position of the hollow profile with respect to the first object is secured with the proposed device, preventing the hollow profile from bending towards the first object (horizontal bending), which may give rise to errors in the determination of the position to be measured. This is particularly advantageous the greater the length the hollow profile comprises given that the greater the length the higher the bending risk.

The compensation device comprises a movable actuator, which moves when it is actuated, said compensation device being configured for modifying the compensation force exerted on the hollow profile with the movement of the actuator.

These and other advantages and features of the invention will become evident in view of the drawings and detailed description of the invention.

### DESCRIPTION OF THE DRAWINGS

Figure 1 is a perspective view of a preferred embodiment of the optoelectronic measuring device of the invention, associated with a first object (with fixing devices seen in an exploded view).
Figure 2 is a front view of the optoelectronic measuring device of Figure 1.
Figure 3 is a plan view of the optoelectronic measuring device of Figure 1 (with the fixing devices attaching a hollow profile of the device to the first object).
Figure 4 shows a compensation device of the optoelectronic measuring device of Figure 1.

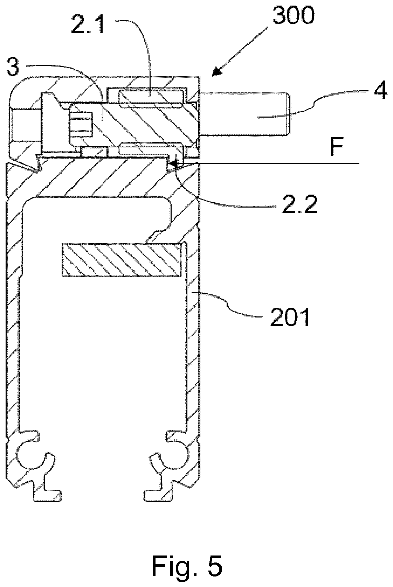

Figure 5 is a section view of the compensation device and of the hollow profile of the optoelectronic measuring device of Figure 1.

### DETAILED DISCLOSURE OF THE INVENTION

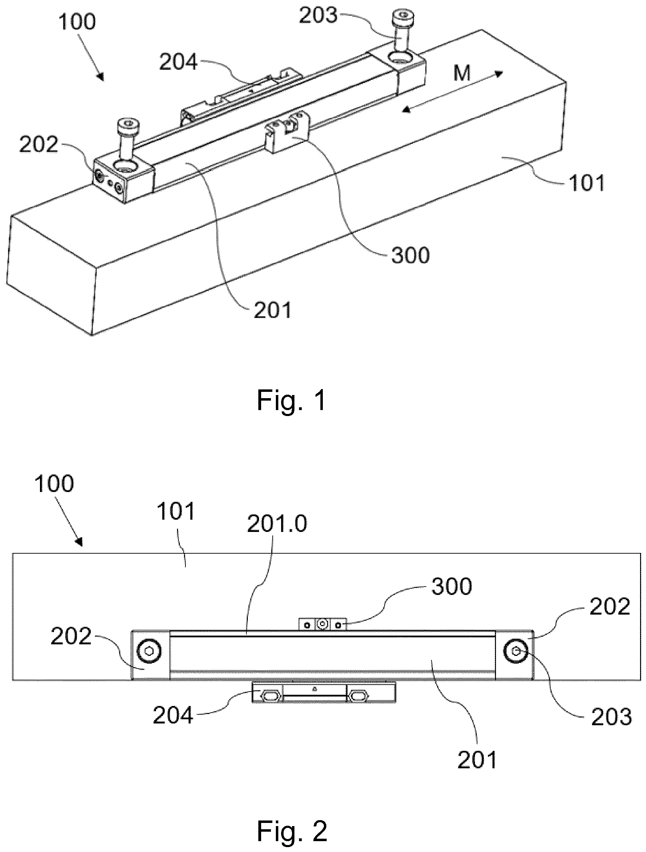

Figures 1 to 3 show a preferred embodiment of the optoelectronic measuring device 100 of the invention which is configured for measuring a relative longitudinal movement in a longitudinal measurement direction M between a first object 101 and a second object (not depicted in the drawings). The first object 101 can be, for example, a work bench or bedplate of a machine.

The device 100 comprises at least one longitudinal hollow profile 201, a respective lid 202 attached to each longitudinal end of the hollow profile 201 for isolating the inside thereof, a fixing device 203 associated with each lid 202 for attaching the hollow profile 201 to the first object 101 through the lids 202, and a readhead 204 for being attached to the second object. The fixing device 203 can be, for example, a screw, and each lid 202 may comprise a through hole for allowing the actuation of the corresponding fixing device 203. The through hole may comprise, for example, a threading complementary to the threading of the screw.

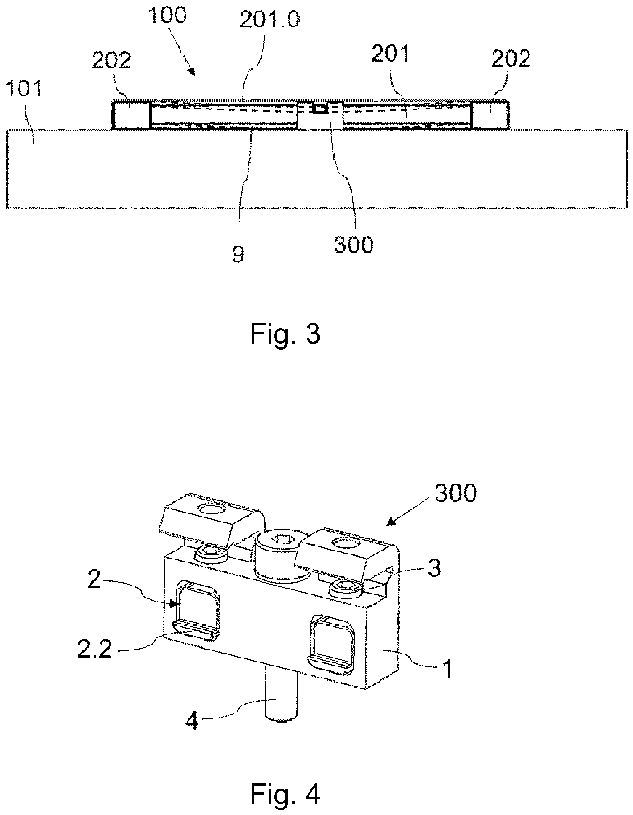

The device 100 further comprises a compensation device 300, shown by way of example in Figure 4, associated with the hollow profile 201, said device being configured for being attached to the hollow profile 201 or to the first object 101, and, with it attached in that manner, for exerting a compensation force F against the hollow profile 201, moving away from the first object 101. Said compensation force F pushes the hollow profile 201 in the direction contrary to the first object 101, such that if a gap 9 is generated between said hollow profile 201 and the first object 101 when the hollow profile 201 is attached to the first object 101, the horizontal bending of said hollow profile 201 (bending towards the first object 101) is prevented with said compensation force F. This effect is shown by way of example in Figure 3 with discontinuous lines.

The compensation device 300 comprises a movable actuator 3, which moves when it is actuated, and is configured for modifying the compensation force F exerted on the hollow profile 201 with the movement of the actuator 3. This allows positioning the hollow profile 201 correctly with respect to the first object 101 in each case. For example, once the hollow profile 201 is fixed to the first object 101, whether or not said hollow profile is correctly positioned (whether or not it is correctly aligned in a longitudinal manner) is measured by means of a dial gauge or an equivalent device. If it is not correctly positioned, the actuator 3 can be actuated to adjust said position (said alignment) as a result of the compensation force F which is exerted on the hollow profile 201. With said actuation, said compensation force F is changed and adjusted until a correct positioning of the hollow profile 201 with respect to the first object 101 is determined. At that moment, the actuator 3 is no longer actuated, and said actuator 3 is left in said position to keep the hollow profile 201 in the correct position.

When the device 100 is assembled, the hollow profile 201 is fixed to the first object 101 and correctly positioned with respect to said first object 101, with the compensation device 300 being attached to said first object 101 or to the hollow profile 201.

In the preferred embodiment, the compensation device 300 comprises a pushrod 2 configured for being moved with the movement of the actuator 3 (when the actuator 3 is actuated). The pushrod 2 is configured, with said compensation device 300 being attached to the hollow profile 201 or to the first object 101, for exerting the compensation force F against said hollow profile 201 by contact with said hollow profile 201. This allows arranging the actuator 3 in a position that is the most convenient possible for the user to be able to actuate same, or in the required position, given that said actuator 3 is not the one which directly exerts the compensation force F, where the movement of said actuator 3 can be transmitted to the pushrod 2 in any manner considered appropriate.

In the preferred embodiment, the hollow profile 201 preferably comprises a longitudinal recess 201.0 on a longitudinal edge which is facing the first object 101 when the hollow profile 201 is attached to said first object 101, and the compensation device 300 is configured for the pushrod 2 to be supported in said recess 201.0 for exerting the compensation force F. Since the hollow profile 201 comprises a recess 201.0 such as the one described, the actuation of the pushrod 2 on said hollow profile 201 is made easier. The recess 201.0 preferably comprises two walls with a specific angle between them, such that the pushrod 2 comes into a support on which to act without any risk of sliding or of another similar action occurring, which may result in an unsuitable or zero compensation force F on the hollow profile 201, or a loss of efficiency of said compensation force F.

In the preferred embodiment, the compensation device 300 comprises a main body 1 which is attached to the hollow profile 201 or to the first object 101, and an attachment device 4 for establishing said attachment. The attachment device 4 is configured for being fixed to the hollow profile 201 or to the first object 101 and can be an elongated element, such as a screw, for example. In this case, the main body 1 comprises a through hole that said attachment device 4 goes through. Said through hole may comprise a threading complementary to the threading of the screw, such that the main body 1 is attached to said attachment device 4, and when said attachment device is attached to the hollow profile 201 or to the first object 101, said main body 1 is also fixed to said hollow profile 201 or to said first object 101.

The actuator 3 and the pushrod 2 are associated with said main body 1 with freedom of movement, such that they can be moved with respect to said main body 1 even when said main body 1 is fixed to the hollow profile 201 or to the first object 101. In that sense, the main body 101 enables freely actuating the actuator 3 and easily adjusting the compensation force F to be exerted on the hollow profile 201.

In the preferred embodiment, the actuator 3 comprises an elongated element cooperating with the pushrod 2, and, when actuated, rotates with respect to its longitudinal axis and is moved axially. The compensation device 300 is configured so that an axial movement of the elongated element causes the movement of the pushrod 2 in the direction opposite the axial movement direction of the elongated element, and therefore a variation of the adjustment force F that said pushrod 2 exerts on the hollow profile 201. This compensation force F will increase or decrease depending on the direction in which the elongated element of the actuator 3 is axially moved. Preferably, furthermore, the elongated element is a screw and comprises a threading, and the pushrod 2 comprises a through hole with a threading complementary to the threading of the elongated element (not identified in the drawings), with the elongated element being housed in said through hole and an actuation of said elongated element causing the rotation of said elongated element and the axial movement thereof, as described above. The actuator 3 and the pushrod 2 thereby act by way of screw and nut.

In the preferred embodiment, the pushrod 2 comprises a main body 2.1 comprising the through hole and a projection 2.2 projecting from said main body 2.2 towards the hollow profile 201 with the device assembled. Said pushrod 2 is configured for exerting the compensation force F against the hollow profile 201 with said projection 2.2.

In the preferred embodiment, the compensation device 300 is configured for being attached to the first object 101, and the main body 1 of said compensation device 300 comprises a through hole that the attachment device 4 goes through. Depending on the length of the hollow profile 201, it is recommendable to fix said hollow profile 201 not only on the ends thereof (through lids 202), but also at intermediate points to prevent vertical bending, as described with respect to the prior art. In the proposed device 100, as a result of the compensation device 300 both vertical bending and horizontal bending are prevented with one and the same device, simplifying the design and assembly of said optoelectronic measuring device 100, but still solving the problem relating to bending in the two mentioned directions.

In the preferred embodiment, the attachment device 4 comprises an elongated element, a screw, for example, with the longitudinal axes of said elongated element and of the elongated element of the actuator 3 being parallel. This allows acting on both the actuator 3 and the attachment device 4 in the same direction, making the work of the user responsible for performing said actuations easier.

A pushrod 2 and its associated actuator 3 of the configuration device 300 may form a compensation assembly, and in the preferred embodiment, the compensation device 300 comprises two compensation assemblies. Each compensation assembly is arranged one on either side of the attachment device 4. In this manner, two compensation forces F are exerted on the hollow profile 201 at two different points, assuring to a greater extent that the hollow profile 201 is kept in the correct position.

Depending on the length of the hollow profile 201, for example, the optoelectronic measuring device 100 may comprise a plurality of compensation devices 300 distributed in the measurement direction M.

## Claims

1. Optoelectronic measuring device (100) configured for measuring a relative longitudinal movement in a longitudinal measurement direction (M) between a first object (101) and a second object, the optoelectronic measuring device (100) comprising a longitudinal hollow profile (201), a respective lid (202) attached to each longitudinal end of the hollow profile (201), a fixing device (203) associated with each lid (202) for attaching the hollow profile (201) to the first object (101) through the lids (202), and a readhead (204) for being attached to the second object, the optoelectronic measuring device (100) further comprising a compensation device (300) associated with the hollow profile (201) and configured for being attached to the hollow profile (201) or to the first object (101), and, with it attached in that manner, for exerting a compensation force (F) against the hollow profile (201) when the hollow profile (201) is attached to the first object (101), moving away from the first object (101), the compensation device (300) comprising a movable actuator (3) which moves when it is actuated, said compensation device (300) being configured for modifying the compensation force (F) exerted on the hollow profile (201) with the movement of the actuator (3).

2. Optoelectronic measuring device (100) according to claim 1, wherein the compensation device (300) comprises a pushrod (2) configured for being moved with the movement of the actuator (3), said pushrod (2) being configured, with said compensation device (300) being attached to the hollow profile (201) or to the first object (101), for exerting the compensation force (F) against said hollow profile (201) by contact with said hollow profile (201).

3. Optoelectronic measuring device (100) according to claim 2, wherein the hollow profile (201) comprises a longitudinal recess (201.0) on a longitudinal edge which is facing the first object (101) when the hollow profile (201) is attached to said first object (101), with the compensation device (300) being configured for the pushrod (2) to be supported in said recess (201.0) for exerting the compensation force (F).

4. Optoelectronic measuring device (100) according to claim 2 or 3, wherein the compensation device (300) comprises a main body (1) which is attached to the hollow profile (201) or to the first object (101) and an attachment device (4) for establishing said attachment, with the actuator (3) and the pushrod (2) being associated with said main body (1) with freedom of movement.

5. Optoelectronic measuring device (100) according to claim 4, wherein the actuator (3) comprises an elongated element cooperating with the pushrod (2), with the compensation device (300) being configured so that an axial movement of the elongated element causes the movement of the pushrod (2) and therefore a modification in the adjustment force (F) that said pushrod (2) exerts on the hollow profile (201).

6. Optoelectronic measuring device (100) according to claim 5, wherein the elongated element comprises a threading and the pushrod (2) comprises a through hole with a threading complementary to the threading of the elongated element, with the elongated element being housed in said through hole and an actuation of said elongated element causing the rotation of said elongated element and the axial movement thereof.

7. Optoelectronic measuring device (100) according to claim 6, wherein the pushrod (2) of the configuration device (300) comprises a main body (2.1) comprising the through hole and a projection (2.2) projecting from said main body (2.1) towards the hollow profile (201) with said hollow profile (201) attached to the first object (101), with said pushrod (2) being configured for exerting the compensation force (F) against the hollow profile (201) with said projection (2.2).

8. Optoelectronic measuring device (100) according to any of claims 4 to 7, wherein the compensation device (300) is configured for being attached to the first object (101), the main body (1) of said compensation device (300) comprising a through hole that the attachment device (4) goes through.

9. Optoelectronic measuring device (100) according to claim 7, wherein the attachment device (4) comprises an elongated element, with the longitudinal axes of said elongated element and of the elongated element of the actuator (3) being parallel.

10. Optoelectronic measuring device (100) according to claim 8 or 9, wherein a pushrod (2) and its associated actuator (3) of the configuration device (300) form a compensation assembly, the compensation device (300) comprising two compensation assemblies and each compensation assembly being arranged one on either side of the attachment device (4).

11. Optoelectronic measuring device (100) according to any of claims 2 to 10, wherein the actuator (3) is accessible from the front of the hollow profile (201) when said hollow profile (201) is attached to the first element (101).

## Patentansprüche

1. Optoelektronische Messvorrichtung (100), welche dazu ausgebildet ist, eine relative Längsbewegung in einer länglichen Messrichtung (M) zwischen einem ersten Gegenstand (101) und einem zweiten Gegenstand zu messen, wobei die optoelektronische Messvorrichtung (100) ein längliches Hohlprofil (201), einen jeweiligen Deckel (202), welcher an jedem Längsende des Hohlprofils (201) befestigt ist, eine Fixierungsvorrichtung (203), welche mit jedem Deckel (202) assoziiert ist, um das Hohlprofil (201) am ersten Gegenstand (101) durch die Deckel (202) zu befestigen, und einen Lesekopf (204), zur Befestigung desselben am zweiten Gegenstand, umfasst, wobei die optoelektronische Messvorrichtung (100) zusätzlich eine Ausgleichsvorrichtung (300) umfasst, welche mit dem Hohlprofil (201) assoziiert ist und dazu ausgebildet ist, am Hohlprofil (201) oder am ersten Gegenstand (101) befestigt zu werden, und, daran befestigt auf diese Weise um eine Ausgleichskraft (F) gegen das Hohlprofil (201) auszuüben, wenn das Hohlprofil (201) am ersten Gegenstand (101) befestigt ist, so dass es sich vom ersten Gegenstand (101) weg bewegt, wobei die Ausgleichsvorrichtung (300) ein bewegliches Stellglied (3) umfasst, welches sich bewegt, wenn es betätigt wird, wobei die genannte Ausgleichsvorrichtung (300) dazu ausgebildet ist, die Ausgleichskraft (F), welche auf das Hohlprofil (201) ausgeübt wird, mit der Bewegung des Stellgliedes (3) zu ändern.

2. Optoelektronische Messvorrichtung (100) nach Anspruch 1, wobei die Ausgleichsvorrichtung (300) eine Stoßstange (2) umfasst, welche dazu ausgebildet ist, mit der Bewegung des Stellgliedes (3) bewegt zu werden, wobei die genannte Stoßstange (2) dazu ausgebildet ist, mit der genannten Ausgleichsvorrichtung (300) am Hohlprofil (201) oder am ersten Gegenstand (101) befestigt, die Ausgleichskraft (F) gegen das genannte Hohlprofil (201) mittels des Kontakts mit dem genannten Hohlprofil (201) auszuüben.

3. Optoelektronische Messvorrichtung (100) nach Anspruch 2, wobei das Hohlprofil (201) eine längliche Ausnehmung (201.0) auf einer Längskante umfasst, welche dem ersten Gegenstand (101) zugewandt ist, wenn das Hohlprofil (201) am genannten ersten Gegenstand (101) befestigt ist, wobei die Ausgleichsvorrichtung (300) derart ausgebildet ist, dass die Stoßstange (2) in der genannten Ausnehmung (201.0) gestützt wird, um die Ausgleichskraft (F) auszuüben.

4. Optoelektronische Messvorrichtung (100) nach Anspruch 2 oder 3, wobei die Ausgleichsvorrichtung (300) einen Hauptkörper (1), welcher am Hohlprofil (201) oder am ersten Gegenstand (101) befestigt ist, und eine Befestigungsvorrichtung (4) zur Herstellung der genannten Befestigung umfasst, wobei das Stellglied (3) und die Stoßstange (2) mit dem genannten Hauptkörper (1) mit Bewegungsfreiheit assoziiert sind.

5. Optoelektronische Messvorrichtung (100) nach Anspruch 4, wobei das Stellglied (3) ein langgestrecktes Element, welches mit der Stoßstange (2) zusammenarbeitet, umfasst, wobei die Ausgleichsvorrichtung (300) derart ausgebildet ist, dass eine Axialbewegung des langgestreckten Elements die Bewegung der Stoßstange (2) und daher eine Änderung bei der Einstellungskraft (F), welche die genannte Stoßstange (2) auf das Hohlprofil (201) ausübt, hervorruft.

6. Optoelektronische Messvorrichtung (100) nach Anspruch 5, wobei das langgestreckte Element ein Gewinde umfasst und die Stoßstange (2) ein Durchgangsloch mit einem Gewinde, welches komplementär zum Gewinde des langgestreckten Elements ist, umfasst, wobei das langgestreckte Element im genannten Durchgangsloch aufgenommen ist und eine Betätigung des genannten langgestreckten Elements die Rotation des genannten langgestreckten Elements und die Axialbewegung desselben hervorruft.

7. Optoelektronische Messvorrichtung (100) nach Anspruch 6, wobei die Stoßstange (2) der Ausbildungsvorrichtung (300) einen Hauptkörper (2.1) umfasst, welcher das Durchgangsloch und einen Vorsprung (2.2), welcher vom genannten Hauptkörper (2.1) zum Hohlprofil (201) hin hervorsteht, umfasst, wobei das genannte Hohlprofil (201) am ersten Gegenstand (101) befestigt ist, wobei die genannte Stoßstange (2) dazu ausgebildet ist, die Ausgleichskraft (F) gegen das Hohlprofil (201) mit dem genannten Vorsprung (2.2) auszuüben.

8. Optoelektronische Messvorrichtung (100) nach einem der Ansprüche 4 bis 7, wobei die Ausgleichsvorrichtung (300) dazu ausgebildet ist, am ersten Gegenstand (101) befestigt zu werden, wobei der Hauptkörper (1) der genannten Ausgleichsvorrichtung (300) ein Durchgangsloch umfasst, durch welches die Befestigungsvorrichtung (4) hindurch geht.

9. Optoelektronische Messvorrichtung (100) nach Anspruch 7, wobei die Befestigungsvorrichtung (4) ein langgestrecktes Element umfasst, wobei die Längsachsen des genannten langgestreckten Elements und des langgestreckten Elements des Stellgliedes (3) parallel sind.

10. Optoelektronische Messvorrichtung (100) nach Anspruch 8 oder 9, wobei eine Stoßstange (2) und deren assoziiertes Stellglied (3) der Ausbildungsvorrichtung (300) eine Ausgleichsbaugruppe bilden, wobei die Ausgleichsvorrichtung (300) zwei Ausgleichsbaugruppen umfasst und jede Ausgleichsbaugruppe auf jeweils einer Seite der Befestigungsvorrichtung (4) angeordnet ist.

11. Optoelektronische Messvorrichtung (100) nach einem der Ansprüche 2 bis 10, wobei das Stellglied (3) aus der Vorderseite des Hohlprofils (201) zugänglich ist, wenn das genannte Hohlprofil (201) am ersten Element (101) befestigt ist.

## Revendications

1. Dispositif de mesure optoélectronique (100) configuré pour mesurer un mouvement longitudinal relatif dans une direction de mesure longitudinale (M) entre un premier objet (101) et un deuxième objet, le dispositif de mesure optoélectronique (100) comprenant un profilé creux longitudinal (201), un couvercle respectif (202) fixé à chaque extrémité longitudinale du profilé creux (201), un dispositif de fixation (203) associé à chaque couvercle (202) pour fixer le profilé creux (201) au premier objet (101) à travers les couvercles (202), et une tête de lecture (204) destinée à être fixée au deuxième objet, le dispositif de mesure optoélectronique (100) comprenant en outre un dispositif de compensation (300) associé au profil creux (201) et configuré pour être fixé au profil creux (201) ou au premier objet (101), et, lorsqu'il est fixé de cette manière, pour exercer une force de compensation (F) contre le profil creux (201) lorsque le profil creux (201) est fixé au premier objet (101), s'éloigner du premier objet (101), le dispositif de compensation (300) comprenant un actionneur mobile (3) qui se déplace lorsqu'il est actionné, ledit dispositif de compensation (300) étant configuré pour modifier la force de compensation (F) exercée sur le profilé creux (201) avec le mouvement de l'actionneur (3).

2. Dispositif de mesure optoélectronique (100) selon la revendication 1, dans lequel le dispositif de compensation (300) comprend un poussoir (2) configuré pour être déplacé avec le mouvement de l'actionneur (3), ledit poussoir (2) étant configuré, ledit dispositif de compensation (300) étant fixé au profilé creux (201) ou au premier objet (101), pour exercer la force de compensation (F) contre ledit profilé creux (201) par contact avec ledit profilé creux (201).

3. Dispositif de mesure optoélectronique (100) selon la revendication 2, dans lequel le profilé creux (201) comprend un évidement longitudinal (201.0) sur un bord longitudinal qui est tourné vers le premier objet (101) lorsque le profilé creux (201) est fixé audit premier objet (101), le dispositif de compensation (300) étant configuré pour que la tige de poussée (2) soit supportée dans ledit évidement (201.0) pour exercer la force de compensation (F).

4. Dispositif de mesure optoélectronique (100) selon la revendication 2 ou 3, dans lequel le dispositif de compensation (300) comprend un corps principal (1) qui est fixé au profilé creux (201) ou au premier objet (101) et un dispositif de fixation (4) pour établir ladite fixation, l'actionneur (3) et le poussoir (2) étant associés audit corps principal (1) avec une liberté de mouvement.

5. Dispositif de mesure optoélectronique (100) selon la revendication 4, dans lequel l'actionneur (3) comprend un élément allongé coopérant avec le poussoir (2), le dispositif de compensation (300) étant configuré pour qu'un mouvement axial de l'élément allongé provoque le mouvement du poussoir (2) et donc une modification de la force d'ajustement (F) que ledit poussoir (2) exerce sur le profilé creux (201).

6. Dispositif de mesure optoélectronique (100) selon la revendication 5, dans lequel l'élément allongé comprend un filetage et la tige de poussée (2) comprend un trou traversant avec un filetage complémentaire au filetage de l'élément allongé, l'élément allongé étant logé dans ledit trou traversant et un actionnement dudit élément allongé provoquant la rotation dudit élément allongé et son déplacement axial.

7. Dispositif de mesure optoélectronique (100) selon la revendication 6, dans lequel le poussoir (2) du dispositif de configuration (300) comprend un corps principal (2.1) comprenant le trou traversant et une projection (2.2) faisant saillie dudit corps principal (2.1) vers le profilé creux (201), ledit profilé creux (201) étant fixé au premier objet (101), ledit poussoir (2) étant configuré pour exercer la force de compensation (F) contre le profilé creux (201) avec ladite projection (2.2).

8. Dispositif de mesure optoélectronique (100) selon l'une quelconque des revendications 4 à 7, dans lequel le dispositif de compensation (300) est configuré pour être fixé au premier objet (101), le corps principal (1) dudit dispositif de compensation (300) comprenant un trou traversant que traverse le dispositif de fixation (4).

9. Dispositif de mesure optoélectronique (100) selon la revendication 7, dans lequel le dispositif de fixation (4) comprend un élément allongé, les axes longitudinaux dudit élément allongé et de l'élément allongé de l'actionneur (3) étant parallèles.

10. Dispositif de mesure optoélectronique (100) selon la revendication 8 ou 9, dans lequel un poussoir (2) et son actionneur associé (3) du dispositif de configuration (300) forment un ensemble de compensation, le dispositif de compensation (300) comprenant deux ensembles de compensation et chaque ensemble de compensation étant disposé de part et d'autre du dispositif de fixation (4).

11. Dispositif de mesure optoélectronique (100) selon l'une quelconque des revendications 2 à 10, dans lequel l'actionneur (3) est accessible par l'avant du profilé creux (201) lorsque ledit profilé creux (201) est fixé au premier élément (101).
